# EUROPEAN PATENT SPECIFICATION

(11) **EP 3 808 202 B1**
(45) Date of publication and mention of the grant of the patent: **31.05.2023**
(21) Application number: 20182732.6
(22) Date of filing: 26.06.2020
(51) Int. Cl.: A43B 1/02, A43B 23/02, A43D 3/02, A43D 3/04, A43D 3/14, B33Y 80/00, A43D 1/02

(54) **LAST, METHOD FOR PRODUCING LAST, AND METHOD FOR PRODUCING SHOE UPPER**
LEISTEN, VERFAHREN ZUR HERSTELLUNG EINES LEISTEN UND VERFAHREN ZUR HERSTELLUNG EINES SCHUHOBERTEILS
FORME, PROCÉDÉ DE PRODUCTION DE FORME ET PROCÉDÉ DE FABRICATION DE TIGE DE CHAUSSURE

(30) Priority: 18.10.2019 JP 2019191353; 14.05.2020 JP 2020084988
(43) Date of publication of application: 21.04.2021
(60) Divisional application: 23158732.0
(73) Proprietor: ASICS Corporation, Kobe-shi, Hyogo 650-8555 (JP)
(72) Inventor: BESSHO, Ayu, Kobe-shi, Hyogo 650-8555 (JP); ABE, Satoru, Kobe-shi, Hyogo 650-8555 (JP); TANIGUCHI, Norihiko, Kobe-shi, Hyogo 650-8555 (JP); KOZUKA, Yuya, Kobe-shi, Hyogo 650-8555 (JP)
(74) Representative: Stolmár & Partner Patentanwälte PartG mbB

(56) References cited:
- WO-A1-2009/000371
- WO-A1-2016/093956
- WO-A1-2018/210939
- US-A- 118 663
- US-A- 2 658 004
- US-A1- 2018 237 964
- US-A1- 2018 317 610

## Description

### FIELD OF THE INVENTION

The present invention relates to a last for shaping a shoe upper, a method for producing the last, and a method for producing the shoe upper.

### BACKGROUND OF THE INVENTION

In producing custom-made shoes tailored to a user's feet, lasts are exclusive for the user. Thus, after shoe uppers are shaped using lasts to produce shoes, the lasts are no longer used unless stored for future use.

US 2018/0014609 A discloses that footwear is produced in a portable housing. US 2016/0206049 A discloses a last pre-form that is composed of a shape memory polymer and thereby re-shapeable. CN 109732913 A discloses that a last is formed by 3D printing. US 1550232 B discloses a last including paper pulp thereinside. WO 2016/093956 A1 discloses a last with an outer plastic layer. US 2658004 discloses a waxen last slip.

However, none of the abovementioned prior art documents specifically and explicitly discloses recycling of lasts that are no longer used.

### SUMMARY OF THE INVENTION

The invention relates to a last for shaping a shoe upper as specified in appended independent claim 1, to a method for producing a last for shaping a shoe upper as specified in appended independent claim 7, and to a method for producing a shoe upper as specified in appended independent claim 11. Additional embodiments of the invention are disclosed in the dependent claims.

### BRIEF DESCRIPTION OF DRAWINGS

Fig. 1A shows a state where an image of a user's foot is being captured to obtain the user's foot shape data for a last according to one embodiment of the present invention.
Fig. 1B is a perspective view of the last.
Fig. 1C shows a state where the last is dissolved to be a dissolved material.
Fig. 2 shows a state where the last is being formed by a 3D printer.
Fig. 3A s a longitudinal cross-sectional view showing a central part and a peripheral part of the last.
Fig. 3B is a longitudinal cross-sectional view of an essential part showing a state where an outer periphery of a body of the last is covered with a protective part.
Fig. 4 is a side view showing a state where an unshaped upper is placed on the last and subjected to steam-heating in a heating box.
Fig. 5A is e view showing a state where a forming mold is being formed by cutting in the case where the last is formed with the forming mold.
Fig. 5B is a perspective view of the forming mold.
Fig. 5C is a perspective view showing the state where the last is being formed with the forming mold.

### DETAILED DESCRIPTION OF THE PREFERRED EMBODIMENT

An embodiment of the present invention will be exemplified with reference to the drawings. Hereinafter, regarding the term representing the direction "inward and outward direction", the inward direction is a direction toward a foot of a shoe wearer, and the outward direction is a direction toward the outside of the shoe. Further, when a description is given below on a shoe upper 2 before and after being shaped, the shoe upper 2 before being shaped can be referred to as an unshaped upper 2A while the shoe upper 2 after being shaped can be referred to as a shaped upper 2B for separate identification of the respective states.

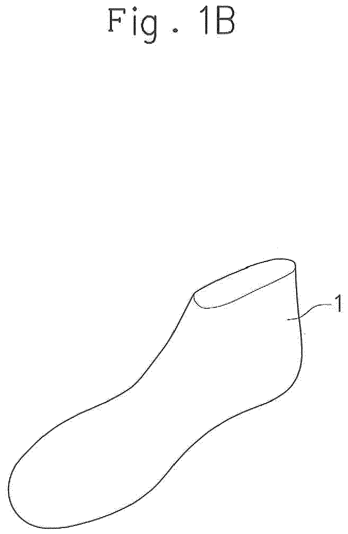

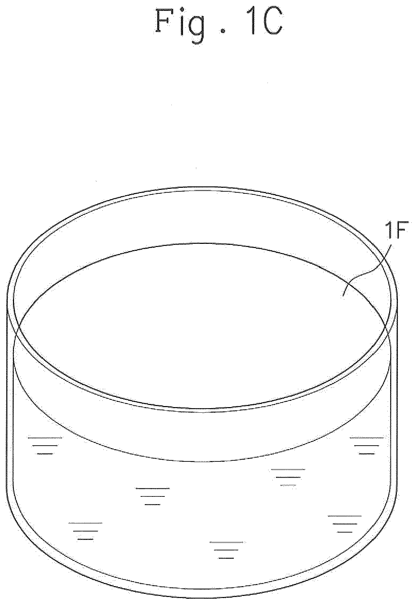

A last (shoe last) 1 of this embodiment is mainly not a last for shoes for mass production, but a custom-made last 1 tailored to a user's foot F. However, the present invention does not intend to completely deny its application to a last for shoes for mass production, but can be applicable thereto. The last 1 can be produced at a shoe retailer, or can be produced at a factory located away from the retailer by transmission and reception of 3D printing data and data on a user's foot using a communication device, as will be described later. The last 1 of this embodiment has at least an outer peripheral portion (i.e., a portion coming into contact with the shoe upper 2 when the shoe upper 2 is shaped) composed of a plastic material. The "plastic material" herein means a material that is reversibly transformed between a solid state where the material has a certain shape (see the shape of the last 1 shown in Fig. 1B) when the shoe upper 2 is shaped by placing a material of the shoe upper 2 (i.e., an unshaped upper 2A) on the last 1 followed by heating or the like for shaping, and a plasticized state where the material has fluidity (see Fig. 1C). Any material that is irreversibly transformed is excluded from examples of the "plastic material". The "fluidity" means a property of liquid (or a material similar to liquid), the property allowing the liquid or the material similar to liquid to freely change its form (outer shape). The shoe upper 2 is, for example, formed of fabric, and in this embodiment formed of fabric composed of a heat-shrinkable fiber sheet.

The plastic material in this embodiment includes a solid content aggregate in which a plurality of solid contents are aggregated, and a shaping material mixed in the solid content aggregate and used for solidifying the solid content aggregate into the certain shape. In this embodiment, a pulp material (i.e., pulp pieces formed into particles or fibers that each are smaller than the last 1 as a whole) is used as the solid contents. That is, the solid content aggregate in this embodiment is a pulp aggregate. This configuration allows the last 1 to be formed of the pulp material, which is a general paper material, and thus to be formed of a readily available material.

The shaping material is dissolved from the solid state to thereby allow the plastic material to have fluidity. The dissolution occurs, for example, by adding a different material (water in this embodiment) to the shaping material, by heating the shaping material, or by irradiating the shaping material with light (e.g., ultraviolet rays). The material used as the shaping material is a water-soluble material, such as starch paste or a water-soluble resin, which exhibits fluidity when water is added thereto. The shaping material is, for example, a liquid in the initial state, and turns to a solid when left for a certain period of time in the state of being in contact with the pulp aggregate. The shaping material is thereafter caused to dissolve so that a liquid with the solid pulp aggregate mixed therein can be made. When a water-soluble shaping material is used, the shaping material is dissolved in water and thereby plasticized; thus, it is advantageous that no special chemical or apparatus is required for dissolution.

A mixing ratio between the pulp aggregate and the shaping material can be determined in consideration, for example, of hardness required when the outer peripheral portion of the last 1 is used (i.e., before and after the shoe upper 2 is shaped), the roughness of the surface of the last 1, atmospheric humidity when the last 1 is used, and a period of time required for the dissolution.

The outer peripheral portion of the last 1 thus configured can be transformed from the solid state to the plasticized state after the shoe upper 2 is shaped, and thereafter transformed back to the solid state. This transformation occurs reversibly. Thus, the last 1 is recyclable.

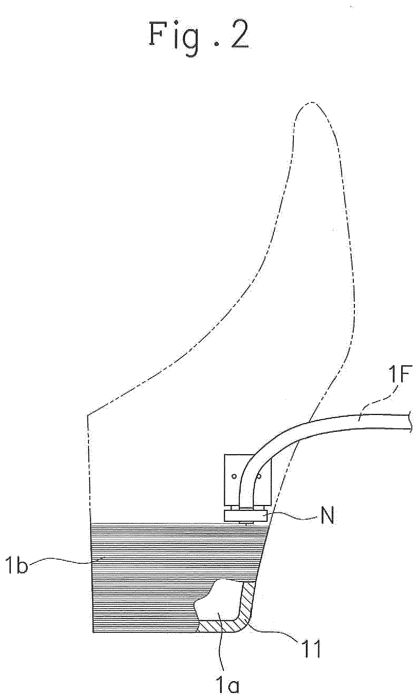

The last 1 is formed of the pulp aggregate layered in the inward and outward direction. The last 1 can be multi-layered or single-layered. The last 1, which can be shaped by the layering, can be formed without the use of a forming mold. Thus, the last 1 can be, for example, shaped using a 3D printer as shown in Fig. 2.

The last 1 may be solid, but is preferably hollow inside thereof (see the partial cross section in Fig. 2). In the case where the last 1 is formed to be hollow, a body 11 that includes the plastic material is formed to surround an internal space 1a, which corresponds to a hollow portion of the last 1. The last 1 formed to be hollow can still ensure the strength by allowing the body 11 to have a certain thickness, and thus has no functional problem. The last 1 formed to be hollow eliminates the necessity to arrange a material in the center portion thereof, and can thus save the material. This configuration can save the time required for forming the last 1. Further, this configuration can save the weight of the last 1, and therefore allows the last 1 to be easily handled. As described above, this configuration has various advantages.

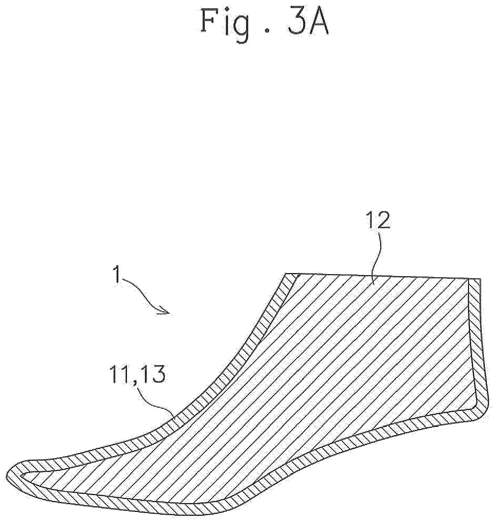

As shown in Fig. 3A, the last 1 includes a central part 12 and a peripheral part 13. The central part 12 is formed in advance as a core member of the last 1, and is constantly held in a solid state. The central part 12 may be solid or hollow. The central part 12 formed to be hollow can save the weight of the last 1. The peripheral part 13 is formed on an outer peripheral portion of the central part 12. The peripheral part 13 is composed of the plastic material. That is, in this configuration, the central part 12 is positioned in the internal space 1a in the aforementioned configuration. This configuration can save the time required for forming the last 1, similar to the aforementioned configuration. This configuration can reduce the amount of the plastic material used for forming the last 1 as compared with the configuration in which the last 1 is solid and entirely formed in a uniform manner. In the case where shoes are produced at a factory, use of the central part 12 as a core material allows only the central part 12, which is slightly smaller than the last 1, to be stored in the factory for a long period of time. Thus, the number of central parts 12 stored per specific space can increase as compared with the case where the lasts 1 are entirely kept, and the storage space can be thereby saved. Even when the lasts 1 of different sizes are required, their central parts 12 can be made to have the same shape (size) so that the necessity to store the lasts 1 by size is eliminated.

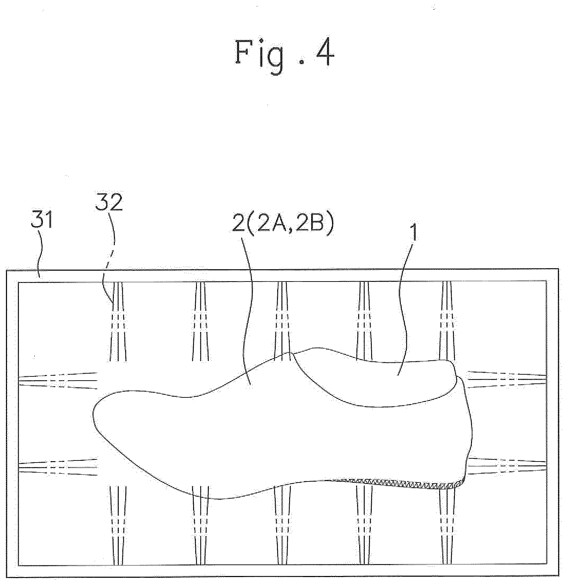

The central part 12 can be formed of a material of higher heat conductivity than that of the peripheral part 13. For example, the central part 12 can be formed of metal (e.g., an aluminum alloy). This configuration causes the central part 12 of the last 1 to be heated when the shoe upper 2 is heated for shaping (see Fig. 4), and thereby allows the shoe upper 2 to be heated also from the side of the central part 12 (that is, the unshaped upper 2A is to be heated from both inside and outside). This configuration can thus shorten the heating time compared to the case where heating is performed only from outside, and allows the shoe upper 2 to be shaped efficiently (i.e., within a short time).

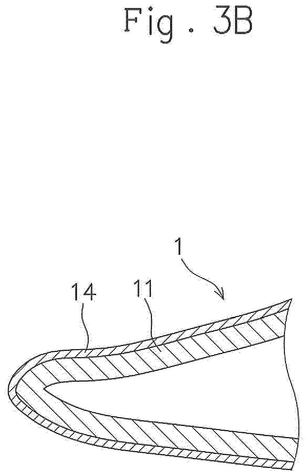

As shown in Fig. 3B, the last 1 can include the body 11, and the protective part 14 having a layer shape or a film shape and covering the outer periphery (outer surface) of the body 11. As aforementioned, the body 11 corresponds to: a portion surrounding the internal space 1a in the case where the last 1 is hollow; the entire last 1 (except the protective part 14) in the case where the last 1 is solid; and the peripheral part 13 in the case where the last 1 includes the central part 12 and the peripheral part 13 (see Fig. 3A). With this configuration, the body 11 can be protected from damage by the protective part 14. The protective part 14 can be configured to allow the last 1 to be resistant to heat or ultraviolet rays. Further, the protective part 14 can be configured to be removed from the body 11. To allow the protective part 14 to be removed, for example, the protective part 14 is attached to the body 11 using adhesive configured to be removable after being attached, or the protective part 14 composed of a material having small adhesiveness to the body 11 is formed. This configuration allows the protective part 14 when attached to the last 1 to protect the body 11, and at the same time allows the protective part 14 when peeled off the last 1 to make the body 11 easily recyclable.

Examples of the protective part 14 include a metal film (e.g., aluminum film), a ultraviolet curing resin that is applied and cured (e.g., epoxy resin), a silicon resin, and rubber. The protective part 14 may be a layer composed of small particles (e.g., sand) blown on the outer periphery of the body 11. The protective part 14 may be a film formed on the body 11 by soaking the body 11 in liquid resin. Further, the protective part 14 can be a film formed by blowing liquid resin onto the body 11, or by applying liquid resin to the body 11 using a brush, a roller or the like.

Next, a method for producing the last 1 will be described. The last 1 is formed by layering the plastic material (mixture of the pulp aggregate and the shaping material) in the inward and outward direction by 3D printing. This forming is performed so that the last 1 has a hollow shape, as shown in the partial cross section in Fig. 2. The portion serving as the peripheral part 13 is layered on the outer periphery of the central part 12 (see Fig. 3A). Use of the 3D printing technique allows the last 1 to be easily formed without use of a forming mold. 3D printing is carried out using a 3D printer including a nozzle N as shown in Fig. 2. The mixture in the plasticized state is discharged through the nozzle N and sequentially piled up from the bottom as shown in Fig. 2 to shape the last 1. Fig. 2 shows a last 1b being shaped.

As the last 1 is formed by 3D printing, a forming speed of the last 1b that is being shaped can be considered. The entire last 1 can be formed at a uniform speed; or for example, for the purpose of shortening the shaping time, an instep portion of the last 1, which corresponds to a portion of a shaped upper 2B that significantly affects wearing feeling of the user, can be precisely shaped at a low speed and the other portions can be coarsely shaped at a high speed. Further, the outer layer of the last 1 with which the shoe upper 2 comes into contact at the time of being shaped can be precisely shaped at a low speed and the inner layer thereof can be coarsely shaped at a high speed. Still further, the last 1 can be shaped to have the outer layer of high density and the inner layer of low density.

Before the last 1 is formed, a data acquiring step of acquiring the user's foot shape data, and a data generating step of generating 3D printing data from the user's foot shape data acquired are performed. Thereafter, a last forming step of layering the pulp aggregate based on the generated 3D printing data is performed. Performing these steps enables forming the custom-made last 1 tailored to the user's foot F.

The 3D printing data is created based on the user's foot shape data, which is individually generated for each of a plurality of users. The 3D printing data thus generated allows the shoe upper 2 to be finely customized for each user.

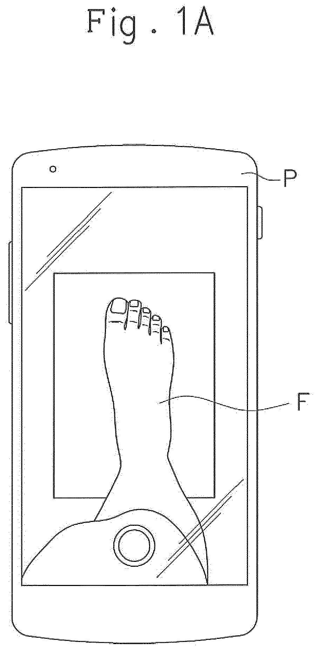

The user's foot shape data refers to, for example, measurement data of each part of the user's foot F generated from image data obtained by capturing an image of the user's foot F as shown in Fig. 1A. Thus, the user's foot shape data can be easily generated using, for example, a digital camera or a smartphone P (see Fig. 1A). In the case, for example, where the smartphone P is used, the foot shape data can be generated based on the image data by software that is installed in advance in the smartphone P. The foot shape data can also be created by calculation using both the captured image data and data owned by a shoemaker in their server.

The image data can be acquired at the user's home or at a retailer (dealer) the user visits. In this case, the image data is transmitted to the server of a shoemaker and the foot shape data is generated at a factory of the shoemaker, so that the lasts 1 and shoes conforming thereto can be subsequently produced at the factory. It is also possible to acquire the image data at a retailer and produce the lasts 1 and shoes conforming thereto at the retailer. It is of course possible to produce the lasts 1 and shoes conforming thereto respectively at different places. The retailer is not limited to a fixed store but may be a mobile store using a car or a trailer.

A dissolving step is performed when the last 1 is no longer required after being used for shaping the shoe upper 2. In the dissolving step, the last 1 after being used is dissolved and fluidized to obtain a dissolved material 1F (see Fig. 1C). Fig. 1C shows the state where the dissolved material 1F is placed in a container. The shape of the container for retaining the dissolved material 1F therein is no particularly limited. The dissolved material 1F is adjusted to have such fluidity as to be capable of being discharged to the outside through the nozzle N of the 3D printer. In the case where the last 1 includes a water-soluble shaping material, the last 1 after being used (i.e., after being used for shaping the shoe upper 2) is fluidized by adding water thereto. The dissolved material 1F in this case is composed of the pulp material as a dispersoid that is dispersed in water as a dispersion medium. The water constituting the dissolved material 1F includes the shaping material (e.g., starch paste) dissolved therein. The shaping material is additionally dissolved in the dissolved material 1F as required. Further, a curing accelerator for accelerating curing after discharged through the nozzle N can be added to the dissolved material 1F. To prevent the pulp material from being deposited in the container, a chemical can be added to the dissolved material 1F, or the dissolved material 1F can be stirred in the container. The dissolving step thus performed allows the solid content aggregate (pulp aggregate) to turn back to the plasticized state, and enables 3D printing using the aggregate in the plasticized state. The last 1 after being used can be thus recycled as a last 1 for another user.

To carry out the dissolving step within a short period of time, hot water can be added to the last 1 after being used. Further, a parting line can be in advance formed on the last 1 at the time of shaping the last 1. Still further, a mechanical device such as a cutter (e.g. shredder) or a device for crushing the aggregates or the like of the last 1 can be used before or after adding cold or hot water to promote dissolution by the cold or hot water.

Next, a method for producing the shoe upper 2 using the last 1 will be briefly described. For example, a material of the shoe upper 2 (i.e., the unshaped upper 2A) composed of a fiber sheet including heat-shrinkable yarns is prepared. Then, carried out are a first shaping step of placing the unshaped upper 2A on the last 1, and a second shaping step of shaping the unshaped upper 2A in conformity with the shape of the last 1 by heating to obtain the shaped upper 2B, as shown in Fig. 4. A steam heating means is used as a heating means in the second shaping step. As schematically shown in Fig. 4, for example, the unshaped upper 2A is placed in a heating box 31, and heated with high-temperature steam 32 discharged from the inner surface of the heating box 31. This steam heating allows the unshaped upper 2A to be entirely and uniformly heated. This configuration allows the unshaped upper 2A to be uniformly deformed in conformity with the shape of the last 1 to obtain the shaped upper 2B. In the second shaping step, hot-air heating, hot water heating, or the like can be used other than the steam heating. Further, the unshaped upper 2Acan be heated not entirely but partially.

Performed after the second shaping step is a sole attaching step, in which the shaped upper 2B is attached to a separately prepared sole by, for example, adhesive. Other than adhesive, heat fusion bonding, for example, can be applied to perform the sole attaching step simultaneously with the second shaping step. In this case, the heat fusion bonding can be efficiently performed using the last 1 having the central part 12 formed of a material of high heat conductivity (for example, a metal such as aluminum, copper, or stainless steel). Forming a shoe tongue, trimming a wearing opening, making eyelets for passing shoelace therethrough, attaching decoration members and tags, printing a logo, and attaching an insole can be performed as appropriate, during any of the aforementioned steps or after all the steps.

Hereinafter, the configurations and operational effects according to the embodiment of the present invention will be summarized. Provided in this embodiment is a last 1 for shaping a shoe upper 2, the last 1 including: a peripheral part 13 that is formed on an outer peripheral portion of a central part 12 and that is formed of a plastic material that is reversibly transformable between a solid state where the plastic material has a certain shape when the shoe upper 2 is shaped, and a plasticized state where the plastic material has fluidity and is thereby deformable.

This configuration allows the outer peripheral portion of the last 1 to be transformed from the solid state to the plasticized state after the shoe upper 2 is shaped, and transformed back to the solid state, thereby allowing the outer peripheral portion of the last 1 to be recyclable.

The plastic material includes a pulp aggregate in which a plurality of pulp materials are aggregated, and a shaping material for solidifying the pulp aggregate into the certain shape, and the shaping material may be configured to be dissolved from the solid state to thereby cause the plastic material to have fluidity.

This configuration allows the pulp material, which is a general paper material, to be used, and thus allows a readily available material to be used.

The shaping material is water-soluble.

This configuration allows the shaping material to be dissolved in water, and thus eliminates the necessity of preparing special chemicals or devices for dissolution.

The last 1 can be formed of the pulp aggregate layered in an inward and outward direction with reference to a foot of a shoe wearer.

This configuration allows the last 1 to be formed by layering without a use of a forming mold, and thus to be shaped, for example, by 3D printing.

The central part 12 of the last 1 can be hollow inside thereof.

This configuration eliminates the necessity to arrange a material in the center portion of the last 1, and can thus save the material.

The last 1 includes: the central part 12 formed in advance as a core and constantly held in the solid state; and the peripheral part 13 that is formed on an outer peripheral portion of the central part 12 and that is formed of the plastic material.

This configuration can shorten the time required for forming the last 1, and can reduce the amount of the plastic material used, as compared with the configuration in which the last 1 is entirely uniformly formed.

The central part 12 may be formed of a material having a higher heat conductivity than that of the peripheral part 13.

This configuration allows the shoe upper 2 to be heated also from the central part 12 side at the time of shaping the shoe upper 2 by heating, and thus allows the shoe upper 2 to be efficiently shaped.

The last 1 can include: a body 11 including the plastic material; and a protective part 14 covering an outer periphery of the body 11.

This configuration allows the protective part 14 to protect the body 11.

The protective part 14 may be capable of being removed from the body 11.

This configuration allows the protective part 14 to be removed from the last 1, and thus allows the body 11 to be easily recyclable.

Provided in this embodiment is a method for producing a last 1 for shaping a shoe upper 2, the method including: forming a portion serving as a peripheral part 13 of the last 1 by layering on an outer periphery of a central part 12 a pulp aggregate in which a plurality of pulp materials are aggregated, in an inward and outward direction with reference to a foot of a shoe wearer, by 3D printing.

The production method thus configured allows the last 1 to be easily formed without a use of a forming mold.

The configuration of the method for producing the last 1 is such that the last 1 includes: the central part 12 formed in advance as a core; and the peripheral part 13 formed on the outer peripheral portion of the central part 12. According to this method, a portion to be formed by 3D printing is limited to the peripheral part 13.

The production method thus configured can shorten the time required for forming the last 1, and can reduce the amount of the plastic material used, as compared with the configuration in which the last 1 is entirely uniformly formed.

The method for producing the last 1 can include: a data acquiring step of acquiring a user's foot shape data; a data generating step of generating 3D printing data from the user's foot shape data; and a last forming step of layering the pulp aggregate based on the 3D printing data.

The production method thus configured allows the last 1 to be formed tailored to the user's foot.

The method for producing the last 1 can include creating the 3D printing data based on the user's foot shape data individually generated for each of a plurality of users.

The production method thus configured allows the shoe upper 2 to be customized for each user.

The user's foot shape data can be generated from image data obtained by capturing an image of the user's foot.

The production method thus configured allows the foot shape data to be easily generated using, for example, a digital camera or a smartphone P.

Provided in the aforementioned embodiment is a method for producing a shoe upper 2, the method including: a first shaping step of placing an unshaped upper 2A on the last 1, the unshaped upper 2A composed of a fiber sheet including heat-shrinkable yarns; and a second shaping step of shaping the unshaped upper 2A in conformity with the shape of the last 1 by heating to obtain a shaped upper 2B.

The production method thus configured allows the shoe upper 2 to be produced using a recyclable last 1.

The present invention has been described by taking an embodiment, but the description is merely an exemplification. The last 1, the method for producing the last 1, and the method for producing the shoe upper 2, according to the present invention, are not limited to the aforementioned embodiment. Thus, various modifications can be made for the last 1, the method for producing the last 1, and the method for producing the shoe upper 2, according to the present invention. The modifications include, for example, partially replacing or partially omitting a plurality of elements constituting the aforementioned embodiments, and combining an element pertaining to an embodiment with an element pertaining to another embodiment as appropriate. The modifications also include combining matters pertaining to common technical knowledge regarding the last 1, the method for producing the last 1, and the method for producing the shoe upper 2.

The aforementioned embodiment has been described by taking, for example, the case where the pulp material is used as the solid content, without limitation thereto. For example, wood pieces (e.g., wood chips), bamboo pieces, natural fiber pieces (e.g., yarn waste or cut pieces of plant fibers), resin pieces (preferably heat-resistant resin pieces), metal pieces, paper pieces (larger than the pulp material and kept in a paper form), fabric pieces, plant pieces (e.g., cut pieces of dry grasses), sand, soil, or mud can be used.

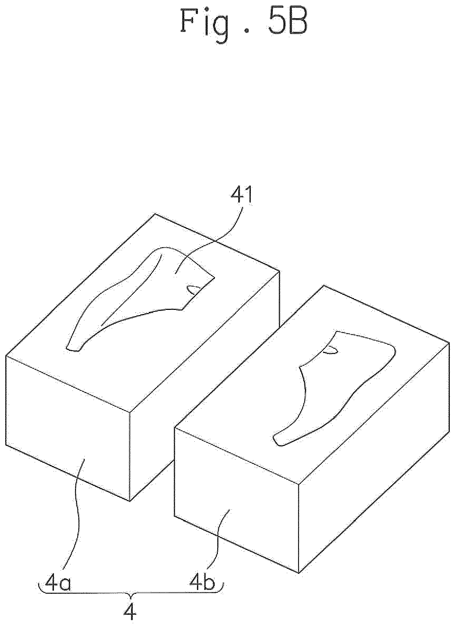

In the aforementioned embodiment, a description has been given on, for example, the method for producing the last 1 in which the material is layered by 3D printing, but the last 1 may be formed by, for example, producing a forming mold 4 shown in Fig. 5B based on the foot shape data and pouring a plastic material into the forming mold 4. The forming mold 4 can be formed by 3D printing.

In this case, as shown in Fig. 5B, the forming mold 4 can be formed by combining a first forming mold 4a having a recess 41 formed to correspond to one side (for example a right side) in the width direction of the last 1 and a second forming mold 4b having the recess 41 formed to correspond to the other side (for example a left side) in the width direction of the last 1.

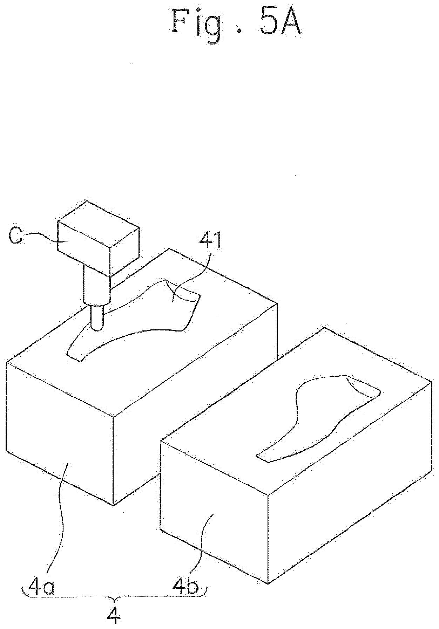

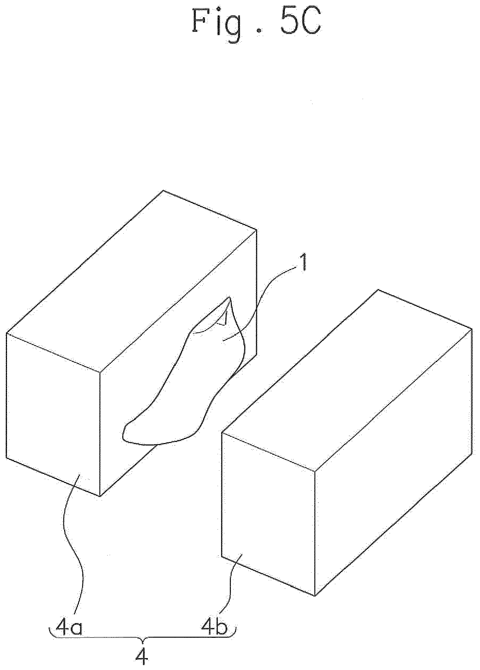

First, as shown in Fig. 5A, the recess 41 is formed in each of the first forming mold 4a and the second forming mold 4b using, for example, a cutting tool C, so as to conform to the shape of the last 1 to be formed. The forming mold 4 before being cut may have a small recess formed in advance. In this case, the recess to be formed in advance may have a size corresponding to the standard size of the last 1 so that additional processing using, for example, a cutting tool C can be minimized. The completed forming mold 4 is as shown in Fig. 5B. The last 1 is formed as shown in Fig. 5C by pouring the plastic material into the recess 41 of the forming mold 4.

In pouring the plastic material into the forming mold 4, the plastic material can be poured into each of the first forming mold 4a and the second forming mold 4b to form a pair of last components (left and right components), which are subsequently joined together to form the last 1, or the plastic material can be poured into the forming mold 4 of after the first forming mold 4a and the second forming mold 4b are joined together, to form the last 1.

This forming mold 4 may also be composed of the plastic material as in the case of the last 1 so that the forming mold 4 after being used can be dissolved and recycled for a forming mold 4 for forming a last 1 having a different shape.

The last 1 may be formed to entirely conform to the shape of the user's foot F, but may be formed to have a specific portion having a desired dimension inconsistent with the shape of the user's foot F for design or functional reasons.

The method for producing the shoe upper 2 includes the aforementioned embodiment in which the fiber sheet including heat-shrinkable yarns are heat-shrunk, but various methods such as: knitting yarns to form fabric surrounding the last 1; or layering a material using a 3D printer are disclosed.

## Claims

1. A last (1) for shaping a shoe upper (2), the last (1) comprising:
a central part (12) formed in advance as a core and constantly held in the solid state; and a peripheral part (13) that is formed on an outer peripheral portion of the central part (12) and that is formed of a plastic material,
wherein a portion of the last coming into contact with the shoe upper (2) when the shoe upper is shaped is composed of the plastic material,
wherein the plastic material is reversibly transformable between a solid state where the plastic material has a certain shape when the shoe upper (2) is shaped, and a plasticized state where the plastic material has fluidity and is thereby deformable,
wherein the plastic material comprises a pulp aggregate in which a plurality of pulp materials are aggregated, and a shaping material for solidifying the pulp aggregate into the certain shape, and the shaping material is configured to be dissolved from the solid state to thereby cause the plastic material to have fluidity,
wherein the shaping material is water-soluble.

2. The last (1) according to claim 1, wherein the last (1) is formed of the pulp aggregate layered in an inward and outward direction with reference to a foot of a shoe wearer.

3. The last (1) according to claim 1 or 2, wherein the central part (12) is hollow inside thereof.

4. The last (1) according to any one of claims 1 to 3, wherein the central part (12) is formed of a material having a higher heat conductivity than that of the peripheral part (13).

5. The last (1) according to any one of claims 1 to 4, comprising: a body (11) comprising the plastic material; and a protective part (14) covering an outer periphery of the body (11).

6. The last (1) according to claim 5, wherein the protective part (14) is capable of being removed from the body (11).

7. A method for producing a last (1) for shaping a shoe upper (2) according to any one of claims 1 to 6, the method comprising:
forming the last (1) by layering a pulp aggregate in which a plurality of pulp materials are aggregated, in an inward and outward direction with reference to a foot of a shoe wearer, by 3D printing,
wherein the last (1) comprises: a central part (12) formed in advance as a core; and a peripheral part (13) that is formed on an outer peripheral portion of the central part (12), so that a portion to be formed by the 3D printing is limited to the peripheral part (13).

8. The method for producing the last (1) according to claim 7, comprising:
a data acquiring step of acquiring a user's foot shape data; a data generating step of generating 3D printing data from the user's foot shape data; and a last forming step of layering the pulp aggregate based on the 3D printing data.

9. The method for producing the last (1) according to claim 8, comprising: creating the 3D printing data based on the user's foot shape data individually generated for each of a plurality of users.

10. The method for producing the last (1) according to claim 9, comprising: generating the user's foot shape data from image data obtained by capturing an image of the user's foot.

11. A method for producing a shoe upper (2), the method comprising:
a first shaping step of placing an unshaped upper (2A) on the last (1) according to any one of claims 1 to 6, the unshaped upper (2A) composed of a fiber sheet comprising heat-shrinkable yarns; and
a second shaping step of shaping the unshaped upper (2A) in conformity with the shape of the last by heating to obtain a shaped upper (2).

## Patentansprüche

1. Leisten (1) zum Formen eines Schuhobermaterials (2), wobei der Leisten (1) umfasst:
einen zentralen Teil (12), der im Voraus als Kern ausgebildet ist und ständig im Festzustand gehalten wird; und einen Umfangsteil (13), der auf einem äußeren Umfangsabschnitt des zentralen Teils (12) ausgebildet ist und der aus einem Kunststoffmaterial gebildet ist,
wobei ein Abschnitt des Leistens, der mit dem Schuhobermaterial (2) in Kontakt kommt wenn das Schuhobermaterial geformt wird, aus dem Kunststoffmaterial besteht,
wobei das Kunststoffmaterial reversibel umwandelbar ist zwischen einem Festzustand, in dem das Kunststoffmaterial eine bestimmte Form hat, wenn das Schuhobermaterial (2) geformt wird, und einem plastifizierten Zustand, in dem das Kunststoffmaterial fließfähig und dadurch verformbar ist,
wobei das Kunststoffmaterial ein Zellstoffaggregat, in dem eine Vielzahl von Zellstoffmaterialien aggregiert sind, und ein Formmaterial zum Verfestigen des Zellstoffaggregats in die bestimmte Form umfasst, und das Formmaterial so eingerichtet ist, dass es aus dem Festzustand aufgelöst wird, um dadurch zu bewirken, dass das Kunststoffmaterial Fließfähigkeit aufweist,
wobei das Formmaterial wasserlöslich ist.

2. Leisten (1) nach Anspruch 1, wobei der Leisten (1) aus dem Zellstoffaggregat gebildet ist, das in einer Richtung nach innen und außen in Bezug auf einen Fuß eines Schuhträgers geschichtet ist.

3. Leisten (1) nach Anspruch 1 oder 2, wobei der zentrale Teil (12) innen hohl ist.

4. Leisten (1) nach einem der Ansprüche 1 bis 3, wobei der zentrale Teil (12) aus einem Material mit einer höheren Wärmeleitfähigkeit als der Umfangsteil (13) gebildet ist.

5. Leisten (1) nach einem der Ansprüche 1 bis 4, umfassend: einen Körper (11), der das Kunststoffmaterial umfasst; und einen Schutzteil (14), der einen Außenumfang des Körpers (11) bedeckt.

6. Leisten (1) nach Anspruch 5, wobei der Schutzteil (14) vom Körper (11) abnehmbar ist.

7. Verfahren zum Herstellen eines Leistens (1) zum Formen eines Schuhobermaterials (2) nach einem der Ansprüche 1 bis 6, wobei das Verfahren umfasst:
Ausbilden des Leistens (1) durch Schichten eines Zellstoffaggregats, in dem mehrere Zellstoffmaterialien aggregiert sind, in einer Richtung nach innen und außen in Bezug auf einen Fuß eines Schuhträgers durch 3D-Druck,
wobei der Leisten (1) umfasst: einen zentralen Teil (12), der im Voraus als Kern ausgebildet wird; und einen Umfangsteil (13), der auf einem äußeren Umfangsabschnitt des zentralen Teils (12) ausgebildet ist, so dass ein durch den 3D-Druck auszubildender Abschnitt auf den Umfangsteil (13) beschränkt ist.

8. Verfahren zur Herstellung des Leistens (1) nach Anspruch 7, umfassend:
einen Datenerfassungsschritt zum Erfassen von Fußformdaten eines Benutzers; einen Datenerzeugungsschritt zum Erzeugen von 3D-Druckdaten aus den Fußformdaten des Benutzers; und einen Formgebungsschritt für den Leisten, bei dem das Zellstoffaggregat basierend auf den 3D-Druckdaten geschichtet wird.

9. Verfahren zum Herstellen des Leistens (1) nach Anspruch 8, umfassend: Erstellen der 3D-Druckdaten basierend auf den Fußformdaten des Benutzers, die individuell für jeden von einer Vielzahl von Benutzern erzeugt wurden.

10. Verfahren zum Herstellen des Leistens (1) nach Anspruch 9, umfassend:
Erzeugen der Fußformdaten des Benutzers aus Bilddaten, die durch Erfassen eines Bildes des Fußes des Benutzers erhalten werden.

11. Verfahren zur Herstellung eines Schuhobermaterials (2), wobei das Verfahren umfasst:
einen ersten Formgebungsschritt zum Anordnen eines ungeformten Obermaterials (2A) auf dem Leisten (1) nach einem der Ansprüche 1 bis 6, wobei das ungeformte Obermaterial (2A) aus einer Faserlage zusammengesetzt ist, die wärmeschrumpfbare Garne umfasst; und
einen zweiten Formgebungsschritt zum Formen des ungeformten Schafts (2A) in Übereinstimmung mit der Form des Leistens durch Erhitzen, um ein geformten Obermaterial (2) zu erhalten.

## Revendications

1. Forme (1) pour façonner une tige de chaussure (2), la forme (1) comprenant :
une partie centrale (12) formée à l'avance comme un noyau et maintenue en permanence à l'état solide ; et une partie périphérique (13) formée sur une partie périphérique extérieure de la partie centrale (12) et formée d'une matière plastique,
dans laquelle une partie de la forme entrant en contact avec la tige de la chaussure (2) lorsque la tige de chaussure est façonnée est composée de la matière plastique,
dans laquelle la matière plastique peut être transformée de manière réversible entre un état solide où la matière plastique a une certaine forme lorsque la tige de chaussure (2) est façonnée, et un état plastifié où la matière plastique a une certaine fluidité et est donc déformable,
dans laquelle la matière plastique comprend un agrégat de pâte dans lequel une pluralité de matériaux de pâte sont agrégés, et un matériau de façonnage pour solidifier l'agrégat de pâte dans une certaine forme, et le matériau de façonnage est configuré pour être dissous à partir de l'état solide pour que la matière plastique ait une certaine fluidité,
dans laquelle le matériau de façonnage est soluble dans l'eau.

2. Forme (1) selon la revendication 1, dans laquelle la forme (1) est formée d'un agrégat de pâte superposé dans une direction intérieure et extérieure par rapport au pied d'un porteur de chaussure.

3. Forme (1) selon la revendication 1 ou 2, dans laquelle la partie centrale (12) est creuse à l'intérieur.

4. Forme (1) selon l'une quelconque des revendications 1 à 3, dans laquelle la partie centrale (12) est formée d'un matériau ayant une conductivité thermique plus élevée que celle de la partie périphérique (13).

5. Forme (1) selon l'une quelconque des revendications 1 à 4, comprenant : un corps (11) comprenant la matière plastique ; et une partie protectrice (14) couvrant une périphérie extérieure du corps (11).

6. Forme (1) selon la revendication 5, dans laquelle la partie protectrice (14) peut être retirée du corps (11).

7. Procédé de fabrication d'une forme (1) pour le façonnage d'une tige de chaussure (2) selon l'une quelconque des revendications 1 à 6, le procédé comprenant :
le formage de la forme (1) en superposant un agrégat de pâte dans lequel une pluralité de matériaux de pâte sont agrégés, dans une direction intérieure et extérieure par rapport au pied d'un porteur de chaussure, par impression 3D,
dans lequel la forme (1) comprend : une partie centrale (12) formée à l'avance comme un noyau ; et une partie périphérique (13) qui est formée sur une partie périphérique extérieure de la partie centrale (12), de sorte qu'une partie à former par l'impression 3D est limitée à la partie périphérique (13).

8. Procédé de fabrication de la forme (1) selon la revendication 7, comprenant :
une étape d'acquisition des données relatives à la forme du pied de l'utilisateur ; une étape de génération des données d'impression 3D à partir des données relatives à la forme du pied de l'utilisateur ; et une dernière étape de formage de la superposition d'agrégat de pâte sur la base des données d'impression 3D.

9. Procédé de fabrication de la forme (1) selon la revendication 8, comprenant : la création des données d'impression 3D sur la base des données relatives à la forme du pied de l'utilisateur, générées individuellement pour chacun d'une pluralité d'utilisateurs.

10. Procédé de fabrication de la forme (1) selon la revendication 9, comprenant : la génération de données sur la forme du pied de l'utilisateur à partir de données d'image obtenues par la capture d'une image du pied de l'utilisateur.

11. Procédé de fabrication d'une tige de chaussure (2), le procédé comprenant :
une première étape de façonnage consistant à placer une tige non façonnée (2A) sur la forme (1) selon l'une quelconque des revendications 1 à 6, la tige non façonnée (2A) étant composée d'une feuille de fibres comprenant des fils thermorétractables ; et
une seconde étape de façonnage consistant à façonner la tige non façonnée (2A) conformément au contour de la forme en la chauffant pour obtenir une tige façonnée (2).
